# FASCICULE DE BREVET EUROPEEN

(11) **EP 1 623 480 B1**
(45) Date de publication et mention de la délivrance du brevet: **26.03.2008**
(21) Numéro de dépôt: 04742555.8
(22) Date de dépôt: 21.04.2004
(51) Int. Cl.: H01Q 1/12, H01Q 21/28

(54) **ANTENNE DE VITRAGE D'AUTOMOBILES**
FENSTERSCHEIBENANTENNE FÜR KRAFTFAHRZEUGE
WINDOW AERIAL FOR MOTOR VEHICLES

(30) Priorité: 02.05.2003 DE 10319606
(43) Date de publication de la demande: 08.02.2006
(73) Titulaire: SAINT-GOBAIN GLASS FRANCE, 92400 Courbevoie (FR)
(72) Inventeur: MAEUSER, Helmut, D-52134 Herzogenrath (DE)
(74) Mandataire: Cardin, Elise
(86) Numéro de dépôt international: PCT/FR2004/000978
(87) Numéro de publication internationale: WO 2004/100311

(56) Documents cités:
- EP-A- 0 975 045
- US-A- 5 926 141
- US-B1- 6 191 746

## Description

L'invention concerne un vitrage à antenne pour automobiles présentant les caractéristiques du préambule de la revendication 1.

On connaît d'après le document DE 198 32 228 C2 un vitrage à antenne pour automobiles possédant ces caractéristiques, dans lequel un revêtement électriquement conducteur est utilisé comme élément d'antenne. Pour découpler des signaux d'antenne en provenance du revêtement placé à l'intérieur du vitrage réalisé en tant que vitrage composite, une électrode de couplage est couplée en régime capacitif audit revêtement. Cette dernière se compose d'une pluralité de fils minces placés parallèlement à distance les uns des autres, qui sont raccordés électriquement à une seule extrémité au moyen d'une barre omnibus ou similaire, et s'étendent sur le revêtement en partant de cette connexion. La couche intermédiaire diélectrique du condensateur ainsi formé est constituée par au moins une couche adhésive du composite.

Cette forme de construction d'une électrode de couplage offre, par comparaison à des réalisations antérieures comprenant une bande de contact étroite appliquée par sérigraphie ou sous forme de feuille sur l'un des vitrages du composite, le gros avantage qu'on ne la voit pratiquement pas à l'état monté. Presque inévitablement, ces électrodes de couplage se situent en effet dans le champ visuel du vitrage en question, qui est installé, par exemple en tant que pare-brise, sur une automobile à carrosserie métallique, car dans de tels cas d'utilisation, il faut éloigner ou découper le revêtement, tout le long du bord du vitrage, pour éviter un couplage direct du champ d'antenne à la carrosserie (mise à la terre). Il n'est donc pas possible de prévoir ladite électrode de couplage très près du bord dudit vitrage où elle pourrait être optiquement cachée par le cadre de la fenêtre.

Le document US 6,191,746 B1 décrit un système d'alimentation à diversité en FM pour par brise de voiture.

Si l'on place des fils de par exemple 10 à 100 µm de diamètre à l'intérieur d'un vitrage composite ou sur sa surface, on ne peut pas les discerner en tant que tels dans des conditions normales, à moins qu'ils ne soient placés à de très courtes distances les uns des autres. Si en revanche leur écartement mutuel est d'au moins à peu près le décuple de leur diamètre, ils ne peuvent être vus en tant que tels que si l'on approche le regard de très près du vitrage en verre. Avec le vitrage à antenne connu, il a été mis en évidence que, comparé à une électrode de couplage plane, constituée par exemple d'une bande de feuille métallique, la capacité de couplage est, dans le cas de la réalisation conforme à l'invention, amplement suffisante pour la transmission du signal de l'antenne.

Des applications pratiques de l'électrode de couplage en fils minces montrent toutefois qu'avec les fils connectés à une extrémité seulement, la puissance de transmission voulue n'est pas toujours obtenue. Pour un placage optique optimal, le nombre des fils et donc la largeur totale de l'électrode sont maintenus le plus petit possible. Dans le cadre d'une fabrication industrielle, l'établissement du contact électrique de l'ensemble des fils avec l'électrode de connexion commune (une base de l'antenne) ne peut cependant pas être assuré entièrement. En fin de compte, il n'y a pas de méthode de test fiable permettant de tester la capacité de fonctionnement de l'électrode de couplage avant et/ou après la fabrication du composite formant le vitrage. Si celle-ci est terminée, et si l'on constate par après le couplage défectueux, toute la vitre est à mettre au rebut.

On pourrait bien imaginer de prolonger les fils et de les laisser déborder des deux côtés, au-delà du vitrage, pour qu'alors un contrôle de continuité soit possible. Il faudrait toutefois encore et toujours tester chaque fil individuellement ou son contact avec la base de l'antenne, si bien que l'on ne peut attendre de cette variante une réduction sensible de la dépense.

Le document DE 42 37 818 A1 décrit un vitrage à antenne pour automobiles, à la surface duquel on place une antenne pour signaux radio en forme de boucle, réalisée par sérigraphie. Partant d'une zone de connexion plane réalisée dans la zone du bord du vitrage, un brin de la boucle pénètre dans le champ visuel du vitrage jusqu'au point de rebroussement, dont revient l'autre brin. Son extrémité libre formant la base de l'antenne est entourée, avec un intervalle en forme de fente, par la zone de départ plane du premier brin. Cette structure forme l'antenne proprement dite et n'est pas prévue pour un couplage capacitif avec une structure d'antenne plane.

L'invention se propose d'encore perfectionner du point de vue de la sécurité de fonctionnement un vitrage à antenne du type de celui décrit dans le document DE 198 32 228 C2.

Selon l'invention, ce problème est résolu avec les caractéristiques de la revendication 1. Les caractéristiques des revendications subordonnées énoncent des perfectionnements avantageux de cet objet.

Si, au lieu simplement de fils parallèles terminant « en aveugle », l'électrode de couplage comprend au moins un fil mince avec deux extrémités disposées dans la zone du bord du vitrage, une limitation de la conductibilité par l'absence de contact d'un fil ou d'une extrémité d'un fil avec un point de regroupement est déjà évitée a priori. Avec des méthodes de test usuelles, on peut contrôler de manière simple la continuité de l'électrode de couplage préfabriquée ou aussi déjà posée. Du point de vue productique, il n'est pas besoin de grande réorganisation pour poser le fil sur ou dans le vitrage composite ; on peut recourir aux mêmes moyens que ceux qui sont utilisés dans le cas de l'électrode de couplage déjà connue. En principe, les extrémités du fil peuvent également être conduites vers l'extérieur, hors d'un composite formant le vitrage, de sorte que d'éventuels problèmes de contact puissent également être éliminés encore sur le vitrage complété.

On peut également concevoir le contrôle à l'état monté, dans le cadre d'un dispositif de diagnostic des appareils correspondants (sélecteur de canaux, radio, TV), afin qu'avec leur diagnostic, on puisse contrôler en même temps aussi la capacité de fonctionnement de l'antenne et des éléments fonctionnels correspondants, et spécialement de l'électrode de couplage et de ses connexions.

Il est vrai que, de préférence, on va réunir les deux extrémités du fil à proximité locale, et ainsi faire décrire au fil au moins une simple boucle. Ceci n'est toutefois pas forcément nécessaire. Il entre également dans le cadre de l'invention de placer à distance l'une de l'autre, par exemple chacune à un coin du vitrage, les deux extrémités situées de part et d'autre d'un tracé, au moins à double pli, décrit par le fil. Le nombre des portions de conducteur formant la boucle peut en ce cas être impair, tandis qu'il sera pair dans le cas de connexions externes étroitement rapprochées de la boucle d'électrode.

Le pliage, au moins simple, du fil, est nécessaire, pour donner à l'électrode de couplage une surface virtuelle (déterminée par l'écartement mutuel des portions de fil parallèles), qui soit suffisante pour le couplage capacitif.

Une électrode de couplage conforme à l'invention peut en principe également comporter plus d'un fil ou plus d'une boucle. Il serait concevable, par exemple, de prévoir deux boucles ou plus, unipolaires, imbriquées l'une dans l'autre ou disposées parallèlement l'une à côté de l'autre, même s'il faut donner la préférence à la solution à un fil, en raison du plus petit nombre de contacts externes à établir.

Pour établir le contact externe de l'électrode de couplage, on prévoit de préférence une interface appropriée (connecteur multiple, conducteur plat, connecteur mâle-femelle) au bord du vitrage 1. On établit ainsi, le vitrage 1 étant monté, des connexions avec l'appareil récepteur (radio, sélecteur de canaux, TV ...) ainsi qu'avec une source de tension dont nous parlerons plus loin. De telles interfaces multipolaires constituent en tant que telles l'état de la technique (cf. par exemple DE-C 195 36 131) et ne seront dès lors pas expliquées plus en détail ici. Nous n'évoquerons pas davantage des mesures de prévention, etc., éventuellement nécessaires, car celles-ci sont usuelles pour l'homme de métier.

Avec toutes ces mesures, le taux de rebut dû à des défaillances de contact dans l'électrode de couplage de vitrages terminés est nettement réduit par rapport au vitrage à antenne connu, et après un montage d'un tel vitrage dans une automobile, une fonction de contrôle est encore possible.

Le nombre de fils superposés sur l'antenne en forme de couche mince et donc la puissance de transmission du condensateur ainsi formé peuvent être influencés selon les besoins par la pose de plusieurs boucles à l'intérieur d'une électrode de couplage ou simplement par un pli simple ou multiple d'une boucle prenant une allure sinueuse. Cette dernière mesure permet d'obtenir une grande couverture superficielle, sans pour autant perdre la possibilité d'un simple contrôle de continuité. Le cas échéant, on pourrait former une seule électrode selon l'invention à partir de plusieurs fils du type décrit plus haut.

A l'instar de l'électrode de couplage connue, la ou les boucles peuvent être préfabriquées sur une feuille adhésive et être posées, avec celle-ci, à l'endroit désiré sur une vitre rigide du vitrage à antenne. Cet ensemble de prémontage peut également être doté d'une interface appropriée pour les connexions externes, dont la qualité de contact peut être déjà vérifiée à l'avance.

Dans le cadre d'un montage pour antenne diversité, on peut prévoir, dans un vitrage à antenne, plusieurs électrodes de couplage de construction conforme à l'invention, distribuées sur le pourtour du vitrage. Dé manière avantageuse, les connexions d'extrémités de plusieurs électrodes de couplage (par exemple dans les coins) peuvent être réunies sur le bord du vitrage, à proximité locale les unes des autres, et contactées vers l'extérieur avec plusieurs pôles, éventuellement avec une interface commune. Ceci peut simplifier la manière de procéder dans le circuit logistique et également le montage des connexions électriques d'un tel vitrage.

Dans une fonction supplémentaire et non évidente, une électrode de couplage selon l'invention pourrait, par exemple si elle était placée dans la zone de repos d'essuie-glace d'un vitrage d'automobile (pare-brise et/ou lunette), être exposée à une tension d'alimentation qui peut elle même être superposée à la tension du signal, et poutrait au besoin servir d'élément chauffant activable séparément. Dans un cas d'application de ce genre, il convient néanmoins de prendre des mesures appropriées connues en soi pour découpler la tension d'alimentation et les signaux HF, prenant par exemple la forme de bobines interconnectées.

En principe, l'invention peut s'appliquer non seulement à des vitrages de verre composites, mais aussi à des vitrages monolithiques pour automobiles, dans le cas desquels le revêtement électriquement conducteur est placé sur la surface tournée vers l'habitacle. Dans ce cas, le revêtement consiste de préférence en des matériaux conducteurs appliqués par voie de pyrolyse, comme par exemple de l'oxyde de zinc dopé. En outre, le fil de l'électrode de couplage est encastré entre des feuilles diélectriques faites dans un polymère transparent. La feuille dirigée vers le revêtement électriquement conducteur se compose de préférence d'un matériau adhésif ou est pourvue d'une couche de colle, à l'aide de laquelle l'électrode de couplage est collée sur la vitre de verre.

L'invention s'applique toutefois en premier lieu aux vitrages de verre composites ou feuilletés. Par conséquent, elle est décrite ici à l'aide d'exemples de réalisation pour des vitrages de verre composites. Alors que les vitrages de pare-brise de véhicules automobiles se composent presque exclusivement de verre composite, le verre composite est utilisé de plus en plus aussi pour les lunettes et les vitres latérales, si bien que des vitrages à antenne de l'invention ne sont pas fondamentalement limités aux pare-brise, mais sont bien évidemment utilisables pour toutes les vitres des automobiles.

D'autres détails et avantages de l'objet de l'invention se dégagent des dessins d'exemples de réalisation et de leurs descriptions approfondies qui vont suivre.

Ont été représentées, sous forme simplifiée :
- Fig. 1: une vue d'un vitrage à antenne de l'invention,
- Fig. 2: une vue de détail agrandie de l'électrode de couplage selon la figure 1,
- Fig. 3: une vue d'une variante d'exécution d'une électrode de couplage de l'invention,
- Fig. 4: une vue en coupe partielle du vitrage à antenne selon la Figure 1 (ligne IV-IV),
- Fig. 5: une autre vue en coupe partielle d'un vitrage à antenne en variante de la Figure 4.

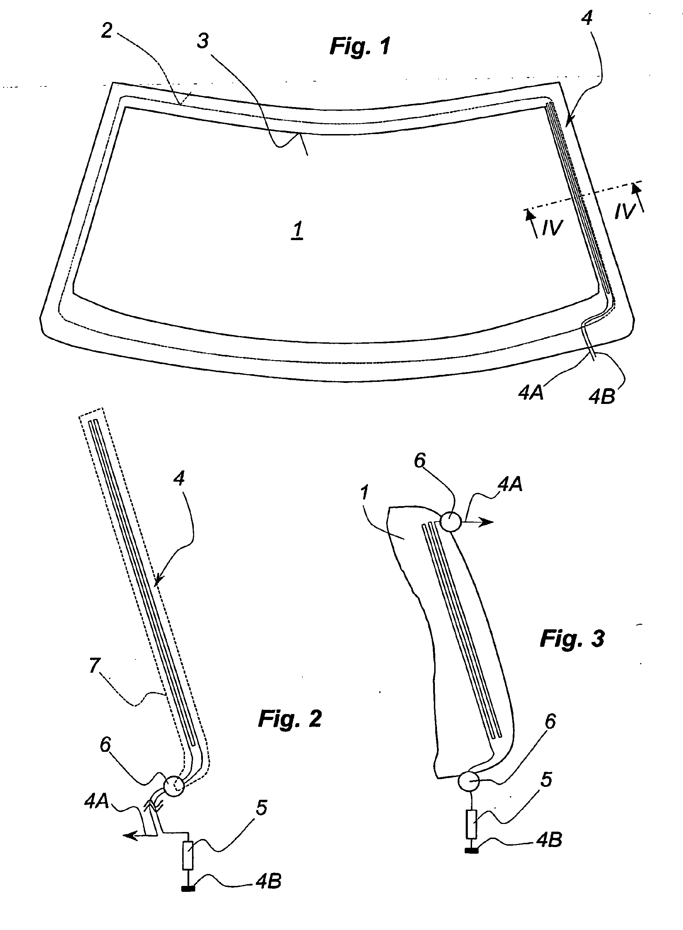

Selon la figure 1, un vitrage à antenne 1 est muni d'un revêtement 2 électriquement conducteur sur toute sa surface, mais qui a toutefois été éloigné sur le pourtour dans la zone du bord du vitrage 1 ou n'a même pas été appliqué. Une ligne en tirets matérialise le bord extérieur du revêtement recouvrant de manière homogène le champ visuel du vitrage 1. En périphérie, sur tout le pourtour extérieur du vitrage 1, on a également prévu un ruban de bord 3 opaque, connu en soi entourant le champ visuel proprement dit du vitrage 1. Ce ruban de bord 3 se compose en pratique d'une encre opaque, par exemple une pâte de sérigraphie à cuire, et recouvre ou plaque d'une part la fixation par adhésion habituelle d'un tel vitrage, et d'autre part, également le bord du revêtement 2. Ici, il a cependant été dessiné en transparence pour les besoins de la représentation.

Comme nous l'avons déjà dit, un tel vitrage à antenne 1 est collé à une collerette, généralement métallique, d'une carrosserie qui n'a pas été représentée. Le revêtement, qui peut être utilisé, à côté d'autres fonctions (comme le chauffage de surfaces et/ou l'isolation aux infrarouges), comme antenne, doit se terminer au moins 20 mm avant le bord extérieur du vitrage 1, afin qu'il ne soit pas mis à la terre avec la carrosserie considérant le rapport surface-capacité. Dans le dernier cas, il ne pourrait pas conduire de tension de signal, ou seulement une tension trop faible.

Pour raccorder le revêtement 2 à un appareil récepteur, on a prévu une électrode de couplage 4 constituée d'un fil mince. Pour fabriquer l'électrode de couplage 4, on utilise de préférence un fil de tungstène, vu le rapport avantageux entre petite épaisseur du fil et tenue en traction. Dans cette réalisation, elle s'étend le long de l'un des bords latéraux du vitrage à antenne 1 et est recouverte en surface par le revêtement 2, sans toutefois le toucher. Elle est donc raccordée à ce dernier en régime capacitif à haute fréquence et à basse impédance.

De préférence, l'électrode de couplage 4 se trouve dans la zone du recouvrement du revêtement 2 par le ruban de bord 3. Elle est alors invisible à l'inspection du vitrage 1. A titre facultatif, si un placage complet de l'électrode de couplage 4 à l'aide du ruban de bord 3 n'est pas possible, le fil constituant l'électrode de couplage 4 peut être noirci en surface, de façon à ce qu'il soit même pratiquement invisible.

Naturellement, dans des variantes non représentées de l'invention, l'électrode peut s'étendre seulement partiellement le long d'un des bords du vitrage.

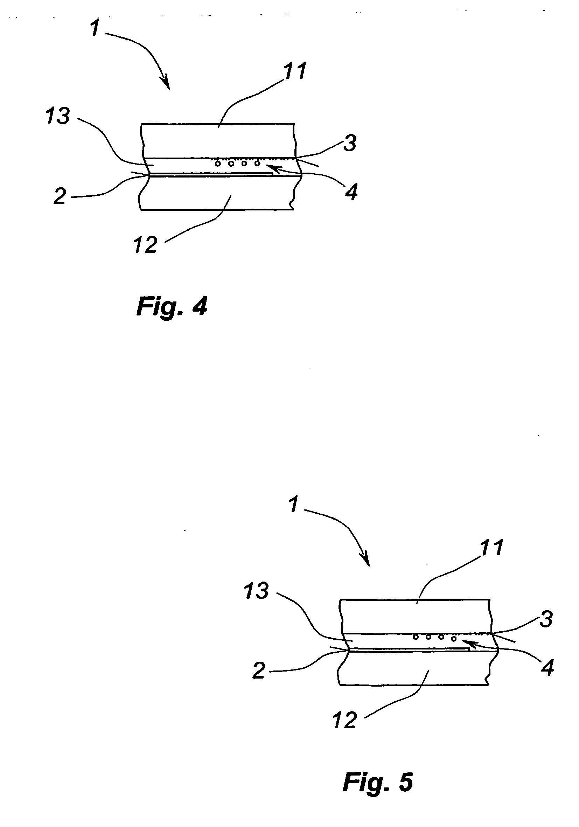

Le vitrage à antenne 1 est, de la manière connue en soi, un vitrage composite avec deux vitres rigides en verre ou matière plastique (voir les figures 4 ou 5); des composites mixtes constitués d'une vitre de verre et de matière plastique sont bien évidemment eux aussi possibles. Le revêtement 2 et l'électrode de couplage 4 sont placés à l'intérieur du vitrage composite, donc entre les deux vitres rigides, mais séparés l'un de l'autre galvaniquement, par une couche intermédiaire diélectrique. On pourrait bien évidemment, en principe, utiliser un couplage galvanique entre le fil et le revêtement, mais il n'est pas certain qu'il pourrait être réalisé sans défaut et de manière sûre.

Deux extrémités libres 4A et 4B de l'électrode de couplage 4 sont conduites vers l'extérieur au-delà du bord extérieur du vitrage 1.

Dans une variante de la représentation de la figure 1 (non représentée), le vitrage à antenne de l'invention peut aussi être muni de plusieurs électrodes de couplage, qui peuvent s'étendre par exemple le long du deuxième bord latéral et/ou le long du bord longitudinal supérieur et/ou inférieur, et peuvent également s'étendre dans le champ visuel et/ou dans un angle. Dans une telle configuration, chaque électrode de couplage peut envoyer, selon la situation de réception, un signal de sortie différent à un dispositif d'antenne diversité.

La figure 2 montre l'électrode de couplage 4 en représentation agrandie. On peut voir qu'elle se compose d'un seul fil continu, qui forme toutefois une boucle une fois pliée. Le fil est donc replié jusqu'à proximité de ses extrémités, partant du point d'inversion le plus éloigné des extrémités, les portions de fil s'étendant parallèlement les unes aux autres avec des écartements qui sont nettement plus grands que l'épaisseur du fil. Ainsi, l'électrode de couplage 4 comprend, entre ses extrémités 4A et 4B, quatre portions de fil parallèles entre elles et se rejoignant à leurs extrémités au niveau de points de rebroussement. On peut donc faire passer par les deux extrémités 4A et 4B un courant de test permettant un contrôle a posteriori simple de la continuité électrique.

Les points critiques sont cependant moins le fil de l'électrode de couplage, à haute stabilité en soi, que les liaisons qui s'y raccordent. Comme on le sait, le tungstène se prête difficilement au brasage tendre, ce qui fait qu'il y a un certain risque de mauvais contact de l'électrode de couplage vers l'extérieur. A la figure 2, avec une flèche de sens gauche, on a indiqué, à l'extrémité 4A, la connexion à un amplificateur non représenté, tandis qu'en amont de l'extrémité 4B (mise à la terre), on a introduit une résistance d'adaptation 5 dans la boucle. Cette dernière permet une adaptation conforme aux besoins de l'impédance de la base de l'électrode de couplage 4 voire de l'ensemble de l'antenne. Une interface 6 est seulement matérialisée par un cercle; on peut prévoir ici une transition du fil mince de l'électrode de couplage 4 vers les connexions externes. En tirets, on a également représenté un substrat en feuille 7, pouvant servir au prémontage de l'électrode de couplage 4 et éventuellement de l'interface 6. Ce substrat en feuille constitue un support ou un support intermédiaire pour le fil mince de l'électrode de couplage et simplifie le dépôt de l'électrode de couplage sur le vitrage à antenne 1.

Les zones de contact se trouvent par conséquent directement au bord du vitrage à antenne 1 et peuvent se situer en dehors du composite formant le vitrage. Les contacts finalement établis par brasage, pinçage et/ou collage avec des colles conductrices peuvent dès lors être contrôlés en une opération avec le courant de test mentionné précédemment, en conséquence de quoi, à la différence de l'électrode de couplage déjà connue, il y a possibilité de réparation à l'extérieur du composite du vitrage. Le cas échéant, on peut même échanger la résistance d'adaptation 5 ou (en cas de réalisation variable) la réajuster.

La longueur du fil mince formant l'électrode de couplage 4 détermine la capacité du condensateur de couplage et peut être dimensionnée dans l'optique d'un affaiblissement le plus réduit possible ; elle devrait être d'au moins 5 cm, environ, et de préférence de 10 à 30 cm. De même, le nombre des portions de fil parallèles est important pour la capacité de couplage ; une augmentation des plis du fil permet également de rehausser l'intensité du signal utile d'antenne.

La figure 3 représente une variante de l'électrode de couplage 4, dans laquelle les deux extrémités 4A et 4B sont conduites à deux points du bord du vitrage 1 espacés l'un de l'autre, en dehors de la surface du vitrage. Du vitrage à antenne 1, on n'a montré qu'un extrait, dans un souci de simplification, sans indiquer le revêtement et le ruban de bord. On distingue sans problème qu'ici, l'électrode de couplage 4 est réalisée avec un nombre impair (cinq) de portions de fil avec quatre plis du fil continu. Une telle variante prévue par l'invention peut être avantageuse, par exemple si les positions pour les connexions électriques prédéfinies par le constructeur automobile ne sont pas proches les unes des autres, comme à la figure 1, ou s'il s'agit de réunir plusieurs bases d'antenne d'électrodes de couplage différentes, montées par exemple au niveau des coins.

La figure 4 représente une vue de coupe partielle du vitrage 1 de la figure 1, près de son bord latéral. On y reconnaît le vitrage 1 composé de deux vitres rigides 11 et 12 qui sont reliées entre elles à l'aide d'une couche adhésive 13 pour former un vitrage feuilleté ou composé habituel. La surface extérieure du vitrage (en son état monté) se trouve en haut. On reconnaît encore le revêtement 2 et le ruban de bord 3 opaque, qui sont séparés l'un de l'autre par la couche adhésive 13 et électriquement isolante. Le revêtement 2 se termine avant le bord du vitrage 1, comme déjà indiqué dans la figure 1. Le fil mince formant l'électrode 4 repose sur le ruban de bord 3, et il n'est donc pas visible à partir de l'extérieur. Ce fil 4 est séparé du revêtement 2 par la couche adhésive 13 formant également le diélectrique d'un condensateur. Dans l'état fini du vitrage 1 le fil de l'électrode de couplage 4 est pratiquement intégré dans la couche adhésive 13 qui peut être une feuille thermoplastique par exempleen polyvinyl-butyrale.

Selon la figure 5, qui montre une variante de la figure 4, la seule différence réside dans le fait que le fil mince formant l'électrode 4 ne repose pas dans sa totalité sur le ruban de bord 3 mais se trouve au moins partiellement dans le champ de vision du vitrage 1 entouré par le ruban de bord 3.

Dans la présente invention, il va sans dire que l'électrode 4 peut également être entièrement disposée dans le champ de vision d'un vitrage à antenne.

## Revendications

1. Vitrage à antenne (1) pour automobiles, comportant :
- un revêtement (2) électriquement conducteur s'étendant en surface sur la surface du vitrage (12) jusqu'à une zone du bord libre du revêtement, ledit revêtement (2) servant d'élément d'antenne,
- une électrode de couplage (4) munie de connexions externes, ladite électrode (4) étant couplée par couplage capacitif au revêtement (2) électriquement conducteur avec interposition d'une couche isolante (13), et l'électrode de couplage (4) se composant au moins d'un fil mince,
**caractérisé en ce que** ledit au moins fil mince, comportant deux extrémités (4A, 4B) pour les connexions externes, part de la zone d'un des bords du vitrage (1), est conduit sur la surface recouverte par le revêtement (2) le long dudit un des bords du vitrage et est renvoyé dans ladite zone dudit un des bords du vitrage avec au moins un pli, formant une boucle de sorte que les deux extrémités (4A, 4B) dudit fil soient situées dans dans ladite zone dudit un des bords du vitrage (1).

2. Vitrage d'antenne (1) selon la revendication 1, **caractérisé en ce que** le fil de l'électrode de couplage (4) formant une boucle, partant de son point d'inversion le plus éloigné des extrémités (4A, 4B) du fil, est replié jusqu'à proximité des extrémités du fil, les portions du fil s'étendant parallèlement entre elles avec des écartements qui sont nettement plus grands que l'épaisseur du fil.

3. Vitrage à antenne (1) selon l'une des revendications 1 ou 2, **caractérisé en ce que** les deux extrémités (4A, 4B) du fil de l'électrode de couplage (4) sont placées dans un voisinage local étroit.

4. Vitrage à antenne (1) selon l'une des revendications 1 ou 2, **caractérisé en ce que** les deux extrémités (4A, 4B) du fil de l'électrode de couplage (4) sont placées à des endroits espacés l'un de l'autre.

5. Vitrage à antenne (1) selon l'une des revendications 1 ou 2, **caractérisé en ce que** les deux extrémités (4A, 4B) du fil de l'électrode de couplage (4) sont placées à proximité de deux coins différents.

6. Vitrage à antenne (1) selon l'une des revendications précédentes, **caractérisé en ce qu'**une extrémité (4A) du fil de l'électrode de couplage (4) est raccordée à un appareil récepteur et/ou émetteur en aval, tandis que l'autre extrémité (4B) est libre ou terminée par l'intermédiaire d'une résistance d'adaptation (5).

7. Vitrage à antenne selon l'une des revendications précédentes, **caractérisé en ce que** plusieurs électrodes de couplage sont prévues à des endroits espacés les uns des autres.

8. Vitrage à antenne selon la revendication 7, **caractérisé en ce que** les extrémités des fils de plusieurs électrodes de couplage sont placées dans un voisinage local étroit.

9. Vitrage à antenne (1) selon l'une des revendications précédentes, **caractérisé en ce que** sa zone de bord est recouverte d'un ruban de bord (3) opaque, ledit ruban recouvrant au moins partiellement l'électrode (4) de couplage.

10. Vitrage à antenne (1) selon l'une des revendications précédentes, **caractérisé en ce que** les connexions externes pour l'électrode de couplage (4) sont établies à l'aide d'un élément de connexion, formant interface (6), qui est raccordé aux extrémités (4A, 4B) du fil de l'électrode de couplage (4) dans ladite zone dudit un des bords du vitrage.

11. Vitrage à antenne (1) selon l'une des revendications précédentes, dont l'électrode de couplage (4) est un composant préfabriqué sur un support (7), avec une couche adhésive pour la fixation par adhésion du fil sur le vitrage à antenne (1).

12. Vitrage à antenne selon la revendication 11, **caractérisé en ce que** le composant préfabriqué comprend une interface (6) pour établir les connexions externes de l'électrode de couplage (4).

13. Vitrage à antenne selon l'une des revendications précédentes, **caractérisé en ce que** le revêtement conducteur (2) et l'électrode de couplage (4) sont placés à l'intérieur d'un composite (11, 12, 13) formant le vitrage (1), à partir duquel les extrémités (4A, 4B) de l'électrode de couplage (4) et/ou une interface (6) raccordée à celles-ci sont conduites vers l'extérieur.

14. Vitrage à antenne selon l'une des revendications précédentes, **caractérisé en ce que** l'électrode de couplage est connectable à une tension électrique d'alimentation superposée à la tension de signal d'antenne et est utilisable en tant qu'élément de chauffage électrique sur demande.

15. Vitrage à antenne selon l'une des revendications précédentes, **caractérisé en ce que** ledit au moins un fil mince de l'électrode de couplage (4) présente un diamètre dans la gamme comprise entre 10 et 100 µm.

16. Utilisation d'un vitrage à antenne selon l'une des revendications 7 ou 8 dans le cadre d'un dispositif d'antenne diversité.

## Claims

1. Antenna glazing (1) for automobiles, comprising:
- an electrically conducting cladding (2) extending surface-wise over the surface of the glazing (12) up to a zone of the free edge of the cladding, said cladding (2) serving as antenna element,
- a coupling electrode (4) furnished with external connections, said electrode (4) being coupled by capacitive coupling to the electrically conducting cladding (2) with interposition of an insulating layer (13), and the coupling electrode (4) being composed at least of one thin wire,
**characterized in that** said at least thin wire, comprising two ends (4A, 4B) for the external connections, starts from the zone of one of the edges of the glazing (1), is conducted over the surface covered by the cladding (2) along said one of the edges of the glazing and is returned to said zone of said one of the edges of the glazing with at least one fold forming a loop, so that the two ends (4A, 4B) of said wire are situated in said zone of said one of the edges of the glazing (1).

2. Antenna glazing (1) according to Claim 1, **characterized in that** the wire of the coupling electrode (4) forming a loop, starting from its point of reversal furthest from the ends (4A, 4B) of the wire, is folded back until the ends of the wire are in proximity, the portions of the wire extending parallel to one another with spacings which are appreciably larger than the thickness of the wire.

3. Antenna glazing (1) according to one of Claims 1 or 2, **characterized in that** the two ends (4A, 4B) of the wire of the coupling electrode (4) are placed in a narrow local neighborhood.

4. Antenna glazing (1) according to one of Claims 1 or 2, **characterized in that** the two ends (4A, 4B) of the wire of the coupling electrode (4) are placed at locations spaced apart.

5. Antenna glazing (1) according to one of Claims 1 or 2, **characterized in that** the two ends (4A, 4B) of the wire of the coupling electrode (4) are placed in proximity to two different corners.

6. Antenna glazing (1) according to one of the preceding claims, **characterized in that** an end (4A) of the wire of the coupling electrode (4) is linked to a receiver and/or transmitter apparatus downstream, while the other end (4B) is free or terminated by way of a matching resistor (5).

7. Antenna glazing according to one of the preceding claims, **characterized in that** several coupling electrodes are provided at spaced apart locations.

8. Antenna glazing according to Claim 7, **characterized in that** the ends of the wires of several coupling electrodes are placed in a narrow local neighborhood.

9. Antenna glazing (1) according to one of the preceding claims, **characterized in that** its edge zone is covered with an opaque edge strip (3), said strip covering the coupling electrode (4) at least partially.

10. Antenna glazing (1) according to one of the preceding claims, **characterized in that** the external connections for the coupling electrode (4) are established with the aid of a connection element, forming an interface (6) which is linked to the ends (4A, 4B) of the wire of the coupling electrode (4) in said zone of said one of the edges of the glazing.

11. Antenna glazing (1) according to one of the preceding claims, whose coupling electrode (4) is a component prefabricated on a support (7), with an adhesive layer for the fixing by adhesion of the wire to the antenna glazing (1).

12. Antenna glazing according to Claim 11, **characterized in that** the prefabricated component comprises an interface (6) for establishing the external connections of the coupling electrode (4).

13. Antenna glazing according to one of the preceding claims, **characterized in that** the conducting cladding (2) and the coupling electrode (4) are placed inside a composite (11, 12, 13) forming the glazing (1), from which the ends (4A, 4B) of the coupling electrode (4) and/or an interface (6) linked to them are conducted to the outside.

14. Antenna glazing according to one of the preceding claims, **characterized in that** the coupling electrode is connectable to an electrical supply voltage superimposed on the antenna signal voltage and is usable in the guise of electric heating element on demand.

15. Antenna glazing according to one of the preceding claims, **characterized in that** said at least one thin wire of the coupling electrode (4) exhibits a diameter in a range lying between 10 and 100 µm.

16. Use of an antenna glazing according to one of Claims 7 or 8 within the framework of a diversity antenna device.

## Patentansprüche

1. Antennenscheibe (1) für Fahrzeuge umfassend :
- eine elektrisch leitende Beschichtung (2), die sich flächig auf der Oberfläche einer Scheibe (12) erstreckt bis zu einem Bereich des freien Randes der Beschichtung, wobei die Beschichtung (2) als Antennenelement dient,
- eine Koppelelektrode (4), die mit externen Anschlüssen versehen ist, wobei die Elektrode (4) kapazitiv mit der elektrisch leitenden Beschichtung (2) unter Zwischenschaltung einer Isolierschicht (13) gekoppelt ist, und die Kopplungselektrode (4) mindestens einen dünnen Draht aufweist,
**dadurch gekennzeichnet, dass** der mindestens eine dünne Draht umfassend zwei Ende (4A, 4B) für die externe Anschlüsse, über einen Teil des Bereiches eines der Ränder der Scheibe auf der durch die Beschichtung (2) bedeckten Fläche über die Länge eines der Ränder der Scheibe geführt ist und in dem Bereich von einem der Ränder der Scheibe mit mindestens einer Faltung, die eine Schleife bildet, derart zurückgeführt ist, dass die beiden Enden (4A, 4B) des Drahts in dem Bereich eines der Ränder der Scheibe (1) angeordnet sind.

2. Antennenscheibe (1) nach Anspruch 1, **dadurch gekennzeichnet, dass** der Draht der eine Schleife bildenden Koppelelektrode (4) ausgehend von deren am weitesten von den Drahtenden (4A, 4B) entferntem Wendepunkt bis in die Nähe der Drahtenden zurückgefaltet ist, wobei die Drahtabschnitte mit Abständen parallel zueinander verlaufen, die deutlich größer als die Dicke des Drahtes sind.

3. Antennenscheibe (1) nach Anspruch 1 oder 2, **dadurch gekennzeichnet, dass** die beiden Enden (4A, 4B) des Drahts der Koppelelektrode (4) in enger örtlicher Nachbarschaft angeordnet sind.

4. Antennenscheibe (1) nach Anspruch 1 oder 2, **dadurch gekennzeichnet, dass** die beiden Enden (4A, 4B) des Drahts der Koppelelektrode (4) an voneinander beabstandeten Stellen des Randes angeordnet sind.

5. Antennenscheibe (1) nach einem der Ansprüche 1 oder 2, **dadurch gekennzeichnet, dass** die beiden Drahtenden (4A, 4B) der Kopplungselektrode in der Nähe zweier unterschiedlicher Ecken angeordnet sind.

6. Antennenscheibe (1) nach einem der vorstehenden Ansprüche, **dadurch gekennzeichnet, dass** ein Ende (4A) des Drahtes der Koppelelektrode (4) mit einem nachgeschalteten Empfangs- und/oder Sendegerät verbunden ist, während das andere Ende (4B) frei oder über einen Anpasswiderstand (5) abgeschlossen ist.

7. Antennenscheibe (1) nach einem der vorstehenden Ansprüche, **dadurch gekennzeichnet, dass** mehrere Koppelelektroden an voneinander beabstandeten Stellen des Randbereichs vorgesehen sind.

8. Antennenscheibe (1) nach Anspruch 7, **dadurch gekennzeichnet, dass** die Enden der Drähte mehrerer Koppelelektroden in enger örtlicher Nachbarschaft angeordnet sind.

9. Antennenscheibe (1) nach einem der vorstehenden Ansprüche, **dadurch gekennzeichnet, dass** ihr Randbereich von einem lichtundurchlässigen Randstreifen (3) überdeckt ist, welcher mindestens teilweise die Koppelelektrode(n) überdeckt.

10. Antennenscheibe (1) nach einem der vorstehenden Ansprüche, **dadurch gekennzeichnet, dass** Außenanschlüsse für die Koppelelektrode mithilfe eines Anschlusselements, insbesondere eines Flachleiter-Anschlusselements, als Schnittstelle (6) hergestellt werden, das mit den Enden (4A, 4B) des Drahtes der Koppelelektrode (4) im Bereich eines der Ränder der Scheibe verbunden ist.

11. Antennenscheibe (1) nach einem der vorstehenden Ansprüche, deren Koppelelektrode (4) ein auf einem Träger (7) vorgefertigtes, mit einer Klebeschicht für die Klebebefestigung des Drahtes auf der Antennenscheibe (1) versehenes Bauteil ist.

12. Antennenscheibe (1) nach Anspruch 11, **dadurch gekennzeichnet, dass** das vorgefertigte Bauteil eine Schnittstelle (6) zum Herstellen der Außenanschlüsse der Koppelelektrode (4) umfasst.

13. Antennenscheibe (1) nach einem der vorstehenden Ansprüche, **dadurch gekennzeichnet, dass** sowohl die leitfähige Beschichtung (2) als auch die Koppelelektrode (4) innerhalb eines Scheibenverbundes (11, 12, 13) angeordnet sind, aus dem die Enden (4A, 4B) der Koppelelektrode (4) und/oder eine mit diesen verbundene Schnittstelle (6) nach außen geführt sind.

14. Antennenscheibe (1) nach einem der vorstehenden Ansprüche, **dadurch gekennzeichnet, dass** die Koppelelektrode mit einer der Signalspannung überlagerbaren Betriebsspannung beaufschlagbar und als separat aktivierbares Heizelement nutzbar ist.

15. Antennenscheibe (1) nach einem der vorstehenden Ansprüche, **dadurch gekennzeichnet, dass** der mindestens eine Draht der Koppelelektrode (4) einen im Bereich zwischen 10 und 100 µm liegenden Durchmesser hat.

16. Verwendung einer Antennenscheibe nach Anspruch 7 oder 8 im Rahmen einer Diversity-Antennenschaltung.
